# FASCICULE DE BREVET EUROPEEN

(11) **EP 1 717 481 B1**
(45) Date de publication et mention de la délivrance du brevet: **22.12.2010**
(21) Numéro de dépôt: 06113241.1
(22) Date de dépôt: 27.04.2006
(51) Int. Cl.: F16F 15/32, F16F 15/34, F01D 5/02

(54) **Dispositif d'équilibrage d'un rotor de turbomachine**
Auswuchtmasse für einen Turbinenrotor
Balancing weight for the rotor of a turbine

(30) Priorité: 29.04.2005 FR 0551127
(43) Date de publication de la demande: 02.11.2006
(73) Titulaire: SNECMA, 75015 Paris (FR)
(72) Inventeur: Brault, Michel, 91800, Boussy Saint Antoine (FR); Judet, Maurice, 77190, Dammarie Les Lys (FR); Langevin, Thomas, 77190, Dammarie Les Lys (FR)
(74) Mandataire: David, Daniel

(56) Documents cités:
- EP-A- 1 445 422
- FR-A- 1 429 000
- US-A- 4 220 055
- US-A- 4 803 893
- US-A- 5 285 700

## Description

La présente invention concerne le domaine des turbomachines et en particulier celui des moteurs à turbine à gaz. Elle se rapporte à un dispositif d'équilibrage de parties tournantes de la machine (voir par exemple US 4 220 055, correspondant au préambule de la revendication indépendante.

Toute partie tournante d'une turbomachine doit être équilibrée après fabrication afin d'assurer un fonctionnement sans vibration. On procède le plus souvent en disposant des masselottes dont la masse est déterminée en fonction du balourd et de la distance à l'axe de rotation de la machine. On profite si cela est possible du boulonnage des brides entre deux parties tournantes pour insérer les masses requises. Ainsi une masselotte peut être glissée sur un boulon de fixation entre la bride et l'écrou de serrage. Un exemple de ce type de montage est rapporté dans le brevet US 5 285 700. Selon un autre cas, le rotor comporte une bride radiale spécifique de montage des masselottes. Le brevet US 4803893 décrit un dispositif d'équilibrage de rotor de turbine selon lequel une rainure radiale tournée vers l'axe de rotation sert de logement aux masselottes, et est ménagée sur la jante du disque de turbine.

La société demanderesse s'est fixé comme objectif de mettre au point un moyen de montage de masselotte qui soit indépendant de toute bride de liaison entre deux pièces d'une partie tournante ou de deux parties tournantes. En effet, dans le cadre d'assemblage modulaire de turbomachines, chaque module rotatif doit être fourni parfaitement équilibré, sans aucune intervention d'équilibrage de la part de celui qui assure le montage du module à un autre module. Le montage de masselotte par le moyen des brides de liaison est donc à éviter.

Le dispositif d'équilibrage doit être aussi léger que possible tout en étant fiable et de montage aisé.

On parvient à réaliser ces objectifs, conformément à l'invention, avec rotor de turbomachine comprenant un dispositif d'équilibrage selon la revendication 1.

Ledit dispositif d'équilibrage comporte au moins une masselotte rapportée sur le rotor la masselotte comportant deux surfaces d'appui radial, orientées selon deux directions radiales opposées, lesdites surfaces coopérant avec deux surfaces d'appui radial ménagées sur le rotor, les surfaces assurant le maintien en place de la masselotte sans autre retenue, et la masselotte étant maintenue contre le rotor par un moyen de retenue axiale.

Contrairement aux dispositifs de l'art antérieur de ce type, connus de la société demanderesse, on prévoit d'immobiliser la masselotte par des appuis radiaux selon les deux directions opposées à la fois, une direction radiale tournée vers l'intérieur et l'autre direction radiale tournée vers l'extérieur. La mise en place en est facilitée et les risques d'erreur de la part du monteur sont plus faibles.

En particulier, le moyen de retenue axiale est un boulon avec écrou, le boulon retenant la masselotte contre une bride d'accrochage solidaire du rotor, comportant une surface d'appui axial et les dites surfaces d'appui radial.

Conformément à un mode de réalisation avantageux de l'invention, la surface d'appui axial est disposée entre les deux surfaces d'appui radial, le boulon traversant la surface d'appui axial. Plus particulièrement, la bride d'accrochage comprend une portion cylindrique axiale et une portion radiale dans laquelle sont ménagées des encoches pour le passage de boulon de fixation de masselottes. Cette disposition est avantageuse dans la mesure où par des encoches on réduit la masse de la bride d'accrochage et où la masselotte une fois en place assure le maintien du boulon pendant que l'on verrouille par l'écrou.

L'invention s'applique notamment pour un rotor comprenant un disque, la bride d'accrochage étant solidaire d'un flanc du disque.

La solution de l'invention permet d'assurer des montages de masselotte très fiables. Si cela est nécessaire, le moyen de retenue axiale de la masselotte est constitué de deux boulons de fixation.

Les masselottes d'équilibrage sont de forme en U avec une branche centrale et deux branches opposées, ces dernières formant les surfaces d'appui radial. Plus particulièrement la masselotte comprend une portion formant masse d'ajustement, c'est à dire que l'on peut usiner pour obtenir la masse d'équilibrage requise.

Afin d'éviter tout risque d'erreur au montage, conformément à une variante la masselotte est symétrique par rapport au plan de sa branche centrale.

On décrit maintenant des modes de réalisation non limitatifs de l'invention, en référence aux dessins annexés sur lesquels :
- la figure 1 représente en coupe axiale un module de rotor de turbine haute pression,
- la figure 2 représente en détail, en coupe axiale, un module selon la figure 1 incorporant le dispositif de l'invention,
- la figure 3 montre en perspective une masselotte de l'invention montée sur une bride d'accrochage du disque,
- la figure 4 illustre l'ordre de montage de la masselotte de la figure 3,
- la figure 5 montre, en coupe axiale, une variante de réalisation de masselotte montée sur une bride d'accrochage,
- la figure 6 montre, en perspective partielle, un mode de réalisation à deux boulons,
- la figure 7 montre en coupe axiale la masselotte de la figure 6.

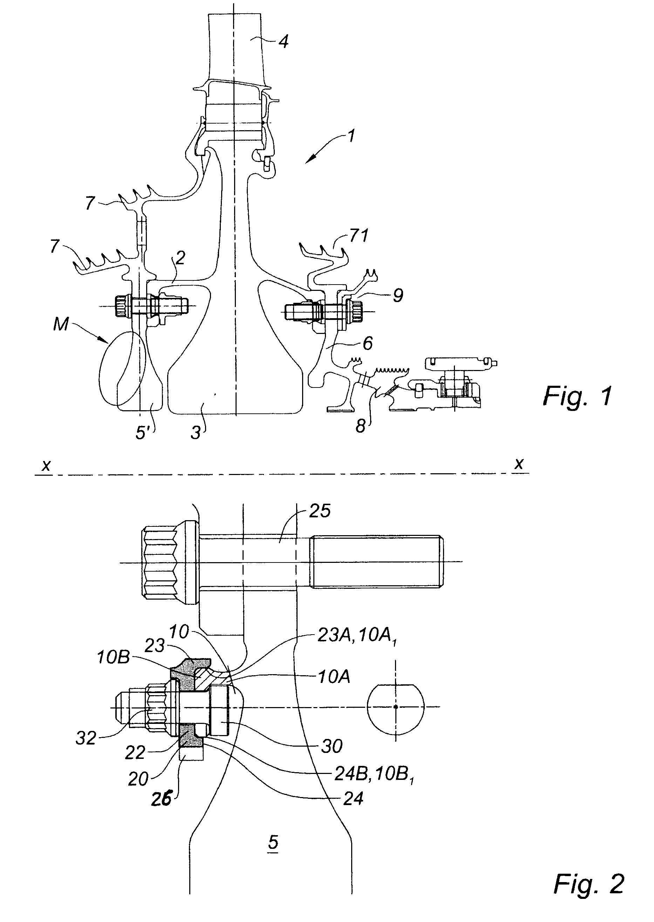

On a représenté sur la figure 1 un exemple de module de rotor de turbine HP vu en coupe à demi selon son axe de rotation XX. Ce module 1 est ici composé d'un disque 3 de turbine avec ses ailettes 4 montées sur sa jante périphérique. En amont par rapport à l'écoulement gazeux en fonctionnement, le disque 3 est solidaire d'un disque 5' qui porte des éléments 7 d'étanchéité à labyrinthes. Le disque 5' est boulonné sur une bride de fixation 2 usinée sur le disque 3. En aval le disque 3 est solidaire d'un disque 6 portant des éléments 7' d'étanchéité à labyrinthes et prolongé d'un tourillon 8 de montage de palier support de turbine. Ce rotor comporte sur le plan d'équilibrage aval des masses 9 d'équilibrage qui sont associées aux boulons de montage du disque 6 sur le disque 3. Ce montage ne fait pas partie de l'invention. Il est réalisé selon l'art antérieur.

On prévoit sur le plan d'équilibrage amont dans la zone M entourée d'une ligne ovale, un dispositif d'équilibrage conforme à l'invention. Cette zone est indépendante de toute liaison avec une autre partie.

En se reportant à la figure 2, on voit un disque 5, correspondant au disque 5' de la figure 1, modifié pour supporter des masselottes conformément à l'invention. Le disque 5 est rendu solidaire du disque 3 par boulonnage sur la bride 2 qui n'est pas représentée sur cette figure. On voit la bride de fixation aval du compresseur après assemblage ; un boulon 25 est engagé entre les deux, sans l'écrou.

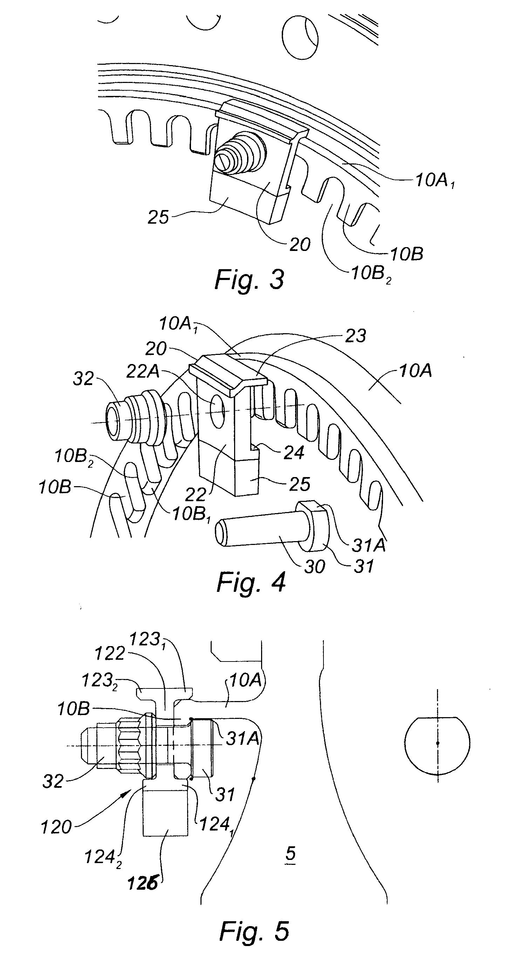

Une bride d'accrochage 10 est usinée sur le flanc amont du disque 5. Cette bride, en forme d'équerre vue en coupe axiale, comprend une partie cylindrique axiale 10A et une partie radiale 10B. Une masselotte 20 est maintenue contre la bride 10 par un boulon 30 et son écrou 32. La masselotte 20 comporte une partie centrale 22 de laquelle s'étendent deux pattes 23 et 24 formant des surfaces d'appui radial 23A et 24B, opposées en direction radiale. La patte 23 s'appuie sur la surface d'appui 10A1 de la portion cylindrique 10A. La patte s'appuie sur la surface d'appui 10B1, voir aussi les figures 3 et 4. La masselotte comprend aussi une partie 26 formant masse d'ajustement. Cette partie est usinée le cas échéant pour ajuster la masse.

Le boulon 30, que l'on voit seul sur la figure 4, présente une tête 31 avec un méplat 31A qui vient en appui contre la face interne de la portion cylindrique 10A. De cette manière la tête est immobilisée en rotation autour de son axe lorsqu'elle est en place.

Sur les figures 3 et 4, la bride 10 est représentée en perspective. On voit de face la partie radiale 10B. Cette partie 10B est festonnée et comprend des encoches 10B2 par l'une desquelles passe le boulon 30.

Le montage de la masselotte 20 est illustré sur la figure 4.

On a déterminé au préalable par calcul la masse à ajouter et sa position angulaire sur le disque. On usine, si cela est nécessaire, la partie de la masselotte qui permet d'ajuster la masse, ici la partie 25. On introduit le boulon 30 radialement dans l'encoche 10B2 correspondant à la position définie par le calcul. La tête vient se loger dans l'espace entre la bride et le disque. On s'assure que le méplat 31A est correctement positionné contre la face interne de la portion cylindrique. On glisse la masselotte sur le boulon par son orifice 22A ménagé dans la branche centrale 22 jusqu'à venir en butée contre la bride. La masselotte est placée de manière à ce que les pattes, 23 et 24 respectivement, viennent contre les deux surfaces d'appui radial 10A1 et 10B1. L'ensemble est maintenu en place sans qu'il soit nécessaire de le tenir. Il suffit alors de visser l'écrou 32. De préférence l'écrou est du type auto-frein par sécurité.

Sur la figure 5, on voit une variante de masselotte 120. Les références portent les mêmes numéros augmentés de 100. La masselotte se distingue de la précédente seulement par sa symétrie par rapport au plan de la partie centrale122. Elle comprend d'un côté les pattes 123₁ et 124₁ et de l'autre côté les pattes 123₂ et 124₂. La partie 126 peut être usinée pour ajuster la masse de la masselotte. Cette géométrie permet un montage indifféremment d'un côté ou de l'autre.

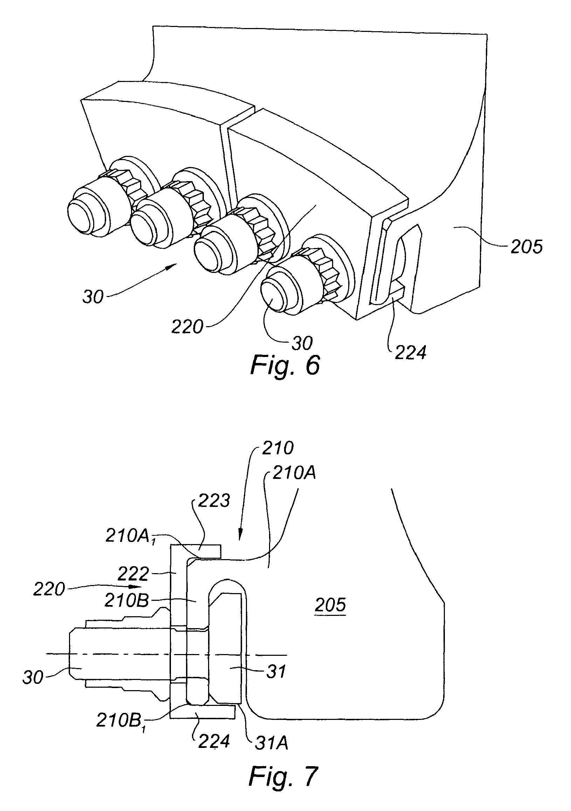

Sur les figures 6 et 7, on a représenté une autre variante de réalisation. Les références visant les parties homologues ont le même numéro augmenté de 200. Le disque 205 comporte une bride 210 d'accrochage de la masselotte qui est ici disposée plus près de l'axe du moteur. La masselotte 220 est montée sur la bride 210, contre la surface 210b et entre les deux surfaces d'appui 210A1 et 210B1, par deux boulons 30 disposés côte à côte. Les deux boulons sont identiques. Cette disposition renforce la sécurité du montage de la pièce. Selon cette variante de masselotte, on a prolongé la patte radialement intérieure 224. Cette patte dépasse la partie radiale 210B et forme une butée anti-rotation pour les têtes 31 des boulons. Les têtes 31 sont bloquées en rotation par la coopération des méplats 31 A avec la patte 224.

La description a porté sur l'équilibrage d'un module de turbine HP mais, l'invention ne se limite pas à cette application. La masselotte peut être montée sur tout type de rotor de turbomachine. Par ailleurs les formes présentées ne sont pas limitatives. L'homme du métier sait adapter la forme en fonction des contraintes qui existent par ailleurs.

## Revendications

1. Rotor de turbomachine comprenant un dispositif d'équilibrage avec au moins une masselotte (20 ; 120 ; 220) rapportée sur le rotor, la masselotte comportant au moins une surface d'appui radial et étant maintenue contre le rotor par un moyen de retenue axiale, **caractérisé par le fait que** la masselotte (20 ; 120 ; 220) comporte deux surfaces (23, 24 ; 123, 124 ; 223, 224) d'appui radial, orientées selon deux directions radiales opposées, lesdites surfaces coopérant avec deux surfaces (10A1, 10B1 ; 210A1, 210B1) d'appui radial ménagées sur le rotor, lesdites surfaces (23, 24, 10 A1, 10B1 ; 123, 124 ; 223 ; 223, 224, 210 A1, 210 B1) assurant le maintien en place de la masselotte (20 ; 120 ; 220) sans qu'il soit nécessaire de la (20; 120; 220) tenir.

2. Rotor selon la revendication 1, dont le moyen de retenue axiale est un boulon (30) avec écrou (32), le boulon retenant la masselotte contre une bride d'accrochage (10 ; 210) solidaire du rotor, comportant une surface (10B, 210B) d'appui axial et les dites surfaces (10A1, 10B1 ; 210A1, 210B1) d'appui radial.

3. Rotor selon la revendication 2, dont la surface (10B ; 210B) d'appui axial est disposée entre les deux surfaces (10A1, 10B1 ; 210A1, 210B1) d'appui radial, le boulon traversant la surface d'appui axial.

4. Rotor selon la revendication 3, dont la bride d'accrochage (10 ; 210) comprend une portion cylindrique axiale (10A ; 210A) et une portion radiale (10B ; 210B) dans laquelle sont ménagées des encoches (10B2 ; 210B2) pour le passage de boulons (30) de fixation de masselottes.

5. Rotor selon l'une des revendications 2 à 4, comprenant un disque (5 ; 205), la bride d'accrochage (10 ; 210) étant solidaire d'un flanc du disque.

6. Rotor selon l'une des revendications 2 à 5, le moyen de retenue axiale étant constitué de deux boulons de fixation (30).

7. Rotor selon l'une des revendications précédentes dont la masselotte est de forme en U avec une branche centrale (22 ; 122 ; 222) et deux branches opposées (23, 24 ; 123, 124 ; 223, 224), ces dernières formant les surfaces d'appuis radiaux.

8. Rotor selon la revendication 7 dont la masselotte comprend une portion formant masse d'ajustement.

9. Rotor selon l'une des revendications 7 et 8, dont la masselotte est de structure symétrique par rapport au plan de sa branche centrale.

## Claims

1. Turbine-engine rotor comprising a balancing device with at least one weight (20; 120; 220) attached to the rotor, the weight comprising at least one radial support surface and being held against the rotor by an axial retaining means, **characterised by** the fact that the weight (20; 120; 220) comprises two radial support surfaces (23, 24; 123, 124; 223, 224), oriented in two opposite radial directions, said surfaces cooperating with two radial support surfaces (10A1, 10B1; 210A1, 210B1) provided on the rotor, said surfaces (23, 24, 10A1, 10B1; 123, 124; 223, 224, 210A1, 210B1) keeping the weight (20; 120; 220) in place without its being necessary to hold it (20; 120; 220).

2. Rotor according to claim 1, the axial retaining means of which is a bolt (30) with a nut (32), the bolt holding the weight against an attachment flange (10; 210) secured to the rotor, comprising an axial support surface (10B, 210B) and said radial support surfaces (10A1, 10B1; 210A1, 210B1).

3. Rotor according to claim 2, the axial support surface (10B; 210B) of which is disposed between the two radial support surfaces (10A1, 10B1; 210A1, 210B1), the bolt passing through the axial support surface.

4. Rotor according to claim 3, the attachment flange (10; 210) of which comprises an axial cylindrical portion (10A; 210A) and a radial portion (10B; 210B) in which notches (10B2; 210B2) are provided for the bolts (30) fixing the weights to pass.

5. Rotor according to one of claims 2 to 4, comprising a disc (5; 205), the attachment flange (10; 210) being secured to a side of the disc.

6. Rotor according to one of claims 2 to 5, the axial retaining means consisting of two fixing bolts (30).

7. Rotor according to one of the preceding claims, the weight of which is in the form of a U with a central arm (22; 122; 222) and two opposite arms (23, 24; 123, 124; 223, 224), the latter forming the radial support surfaces.

8. Rotor according to claim 7, the weight of which comprises a portion forming an adjustment mass.

9. Rotor according to one of claims 7 and 8, the weight of which has a symmetrical structure with respect to the plane of its central branch.

## Patentansprüche

1. Rotor einer Turbomaschine, umfassend eine Ausgleichsvorrichtung mit zumindest einem Auswuchtgewicht (20; 120; 220), aufmontiert auf dem Rotor, wobei das Auswuchtgewicht zumindest eine radiale Auflagefläche umfasst und gegen den Rotor durch ein axiales Rückhaltemittel gehalten wird, **dadurch gekennzeichnet, dass** das Auswuchtgewicht (20, 120, 220) zwei radiale Auflageflächen (23, 24; 123, 124; 223, 224) umfasst, die in zwei entgegengesetzte radiale Richtungen ausgerichtet sind, wobei die Flächen mit zwei radialen Auflageflächen (10A1, 10B1; 210A1, 210B1), die auf dem Rotor angebracht sind, zusammenarbeiten, wobei die Flächen (23, 24, 10A1, 10B1; 123, 124; 223, 224, 210A1, 210B1) sicherstellen, dass das Auswuchtgewicht (20; 120; 220) an seiner Stelle gehalten wird, ohne dass es erforderlich wäre, es festzuhalten.

2. Rotor nach Anspruch 1, wobei das axiale Rückhaltemittel ein Bolzen (30) mit Schraubenmutter (32) ist, wobei der Bolzen das Auswuchtgewicht gegen einen Aufhängeflansch (10, 210) zurückhält, der mit dem Rotor fest verbunden ist, umfassend eine axiale Auflagefläche (10B, 210B) und die radialen Auflageflächen (10A1, 10B1; 210A1, 210B1).

3. Rotor nach Anspruch 2, wobei die axiale Auflagefläche (10B, 210B) zwischen den zwei radialen Auflageflächen (10A1, 10B1; 210A1, 210B1) angeordnet ist, wobei der Bolzen die axiale Auflagefläche durchquert.

4. Rotor nach Anspruch 3, wobei der Aufhängeflansch (10, 210) einen zylindrisch axialen (10A, 210A) und einen radialen (10B, 210B) Abschnitt aufweist, in dem Schlitze (10B2; 210B2) für den Durchgang der Befestigungsbolzen (30) der Auswuchtgewichte angeordnet sind.

5. Rotor nach einem der Ansprüche 2 bis 4, umfassend eine Scheibe (5; 205), wobei der Aufhängeflansch (10; 210) mit einer Scheibenflanke fest verbunden ist.

6. Rotor nach einem der Ansprüche 2 bis 5, wobei das axiale Rückhaltemittel aus zwei Befestigungsbolzen (30) besteht.

7. Rotor nach einem der vorhergehenden Ansprüche, wobei das Auswuchtgewicht eine U-Form mit einem zentralen Schenkel (22; 122; 222) und zwei gegenüberliegende Schenkel (23, 24; 123, 124; 223, 224) aufweist, wobei letztere die radialen Auflageflächen bilden.

8. Rotor nach Anspruch 7, wobei das Auswuchtgewicht einen Abschnitt aufweist, der eine Einstellungsmasse bildet.

9. Rotor nach einem der Ansprüche 7 und 8, wobei das Auswuchtgewicht eine symmetrische Struktur bezüglich der Ebene seines zentralen Schenkels aufweist.
